# EUROPÄISCHE PATENTSCHRIFT

(11) **EP 2 388 101 B1**
(45) Veröffentlichungstag und Bekanntmachung des Hinweises auf die Patenterteilung: **22.02.2017**
(21) Anmeldenummer: 11001849.6
(22) Anmeldetag: 05.03.2011
(51) Int. Cl.: B23K 26/20, C04B 37/00, C21D 9/50, H01M 8/02, B23K 1/00, B23K 1/005

(54) **Fügenverfahren von metallischen und/oder keramischen Werkstoffen mit Hilfe eines glaskeramischen Zusatzwerkstoffes**
Method of joining of metallic and/or ceramic materials with the help of a glass ceramic filler material
Méthode d'assemblage de matières premières métalliques et/ou céramiques à l'aide d'une matière première additionnelle vitrocéramique

(30) Priorität: 26.04.2010 DE 102010018367
(43) Veröffentlichungstag der Anmeldung: 23.11.2011
(73) Patentinhaber: Forschungszentrum Jülich GmbH, 52425 Jülich (DE)
(72) Erfinder: Faidel, Dietrich, 52064 Aachen (DE); Behr, Wilfried, 53879 Euskrichen (DE); Reisgen, Uwe, 52249 Eschweiler (DE)

(56) Entgegenhaltungen:
- WO-A1-2011/057851
- BE-A- 714 641
- JP-A- 5 166 462
- JP-A- S63 168 272
- US-A1- 2009 114 625
- US-B1- 6 656 625

## Beschreibung

Die Erfindung betrifft ein Verfahren zum Fügen von metallischen und / oder keramischen Werkstoffen mit Hilfe eines glaskeramischen Zusatzwerkstoffes gemäß dem Oberbegriff des Anspruchs 1 (siehe, z.B., US6 656 625 B1).

### Stand der Technik

Unter dem Begriff Fügen wird eine Fertigungstechnik (DIN 8580ff) verstanden, die das dauerhafte Verbinden von mindestens zwei Bauteilen bewirkt. Durch das Fügen wird der Zusammenhalt zwischen den zuvor getrennten Werkstücken lokal an einer Fügestelle geschaffen und so eine Formänderung des neu entstandenen Teils herbeigeführt. Über die Wirkflächen der Verbindung werden die auftretenden Betriebskräfte übertragen.

Zum Fügen von metallischen Werkstoffen sind unterschiedliche Verfahren, wie beispielsweise das Löten oder Schweißen bekannt. Unter Löten wird in der Regel ein thermisches Verfahren zum stoffschlüssigen Fügen von Werkstoffen verstanden, wobei eine flüssige Phase durch Schmelzen eines Lotes (Schmelzlöten) oder durch Diffusion an den Grenzflächen (Diffusionslöten) entsteht. Die Liquidustemperatur der Grundwerkstoffe wird dabei nicht erreicht. Im Gegensatz dazu wird diese Temperatur beim Schweißen überschritten. Unter Schweißen versteht man (gemäß EN 14610 und DIN 1910-100) das unlösbare Verbinden von Bauteilen unter Anwendung von Wärme oder Druck, mit oder ohne Schweißzusatzwerkstoffe. Dabei werden beim Schmelzschweißen die Grundwerkstoffe bis zur Verflüssigung erhitzt und so verbunden. Ein solches Schweißverfahren zum gasdichten Verbinden von metallischen Bauteilen ist beispielsweise aus JP 05166462 bekannt. Sowohl Löt- als auch Schweißverbindungen sind stoffschlüssige Verbindungen, das bedeutet, dass sich diese Verbindungen nur durch Zerstörung der Verbindungsmittel trennen lassen.

Bei der Herstellung einer Hochtemperatur-Brennstoffzelle (SOFC = Solid Oxide Fuel Cell) werden Fügeprozesse benötigt, die eine gasdichte und elektrisch isolierende Verbindung von Metallbauteilen ermöglichen, die auch bei hohen Temperaturen bis zu 950 °C standhalten. In der Regel werden zur Erzielung größerer Leistungen mehrere, insbesondere bis zu 200 Einzelzellen zu einem so genannten Brennstoffzellenstapel zusammengebaut, das bedeutet, die Brennstoffeinzelzellen werden durch Fügeprozesse miteinander verbunden.

Zu den gebräuchlichsten Fügeverfahren gehört auch das Löten. Bei der Einteilung von Lötverfahren wird danach unterschieden, welcher Energieträger eingesetzt wird, beispielsweise durch elektrischen Strom oder durch eine elektrische Gasentladung.

Zudem spricht man je nach Liquidustemperatur des eingesetzten Lotes vom Weichlöten (bis 450 °C), vom Hartlöten (ab 450 °C) und über 900 °C vom Hochtemperaturlöten. Das Hochtemperaturlöten (HT-Löten) ist ein Lötverfahren, das überwiegend zum Fügen von thermisch und mechanisch hoch belasteten Bauteilen aus Edelstahl, Nickel- und Kobaltlegierungen sowie Keramiken verwendet wird. Das HT-Löten ist ein flussmittelfreies Lötverfahren, welches bei Temperaturen von mehr als 900 °C stattfindet. Die Lötverbindungen werden vornehmlich in geschlossenen Vakuumöfen oder in Schutzgasöfen mit Wasserstoff- oder Argonatmosphäre hergestellt. Als Lotwerkstoffe kommen kupfer-, nickel-, silber- und kobalthaltige Lote zum Einsatz

Stand der Technik für die Herstellung von SOFC-Stapeln ist heute die Ofenlötung mit einem Glaslot. Dabei werden die Ebenen des SOFC-Stapels, auf die eine Kontur aus Glaslotpaste mit einem Dispenser aufgetragen wurde, aufeinander gestapelt und im Ofen bei Temperaturen zwischen 850 °C und 950 °C gefügt.

Glaslot ist ein Glas mit besonders niedriger Erweichungstemperatur (z. B. 400 °C), das in der Regel zum thermischen Verbinden oder Abdichten von Gegenständen aus Glas verwendet wird. Glaslote eignen sich aber auch sehr gut zum Verbinden von metallischen Bauteilen. So werden derzeit schon verschiedene Glaslote zum Fügen von SOFC-Bauteilen eingesetzt. Die Betriebstemperaturen von Hochtemperatur-Brennstoffzellen liegen in der Regel im Bereich von 700 bis 1000 °C. Daher sollte das einzusetzende Dichtungsmaterial maßgeschneidert sein, um einerseits an den thermischen Ausdehnungskoeffizienten der beteiligten Bauteile angepasst zu sein, andererseits aber auch eine hermetische Dichtung im Temperaturbereich von 200 bis 1200 °C sicherzustellen. Chemische Wechselwirkungen mit den weiteren Brennstoffzellenbauteilen sollten ebenfalls ausgeschlossen sein. In Bezug auf die Langzeitstabilität solcher Dichtungen werden Standzeiten von mehr als 40.000 Betriebsstunden bei Betriebstemperatur angestrebt.

Entsprechend ihres Verhaltens während des Lötprozesses unterscheidet man stabile Glaslote und kristallisierende Glaslote. Stabile Glaslote verhalten sich wie herkömmliche Gläser. Während des Lötvorganges ändern sich ihre Eigenschaften nicht; bei erneutem Erhitzen der Lötstelle zeigt ihre Erweichung die gleiche Temperaturabhängigkeit wie beim vorhergegangenen Lötprozess.

Kristallisierende Glaslote, wie sie bei den Fügeverfahren einer SOFC eingesetzt werden, besitzen im Gegensatz zu stabilen Glasloten eine erhöhte Kristallisationsneigung. Während des Lötprozesses gehen sie in einen keramikartigen, polykristallinen Zustand über. Im Verlauf der Kristallisation steigt die Viskosität um mehrere Größenordnungen an, so dass weitere Fließvorgänge unterdrückt werden. Andererseits ermöglicht die Kristallisation eine stärkere thermische Wiederbelastung der Lötverbindung über das Temperaturgebiet des Lötvorganges hinaus.

Wenn nach dem Fügen eine Ebene eines Brennstoffzellenstapels undicht ist, ist regelmäßig der gesamte SOFC-Stapel unbrauchbar. Das eingesetzte Glaslot kristallisiert durch den Ofenprozess zu einer Glaskeramik. Zum Wiederaufschmelzen der Glaskeramik würde mehr Energie und somit eine höhere Temperatur benötigt als beim Glaslot-Fügeprozess. Dabei könnten jedoch Bestandteile der SOFC beschädigt werden, so dass von einem Wiederaufschmelzen üblicherweise kein Gebrauch gemacht wird.

Ein Verfahren, mit dem diese Problematik vorteilhaft umgangen werden kann, ist das Laser unterstütze Glaslotfügen. Im Bereich der Fertigung mit keramischen Bauteilen wird dieses Verfahren schon eingesetzt. Auch das Einzelpunktlöten mit einem Lotdraht ist bekannt. Der Einsatz eines Lasers ermöglicht eine exakte Fokussierung und damit das Löten von kleinsten Lötstellen. Die besonderen Vorteile dieses Verfahrens liegen auf der Hand:
- berührungslose Wärmeübertragung
- exakte Fokussierung
- hohe Leistungsdichte
- hohe Qualität der Lötstellen bei hoher Prozess-Sicherheit.

Strahlquelle für das Laserlöten ist in der Regel ein Diodenlaser. Im Lasergenerator erfolgt die Strahlerzeugung und Strahlformung. Mit einer Optik wird der Laserstrahl exakt auf die Lötstelle fokussiert. Durch die Absorption der Wärmestrahlung entsteht die an der Lötstelle erforderliche Temperatur, deren Energie-Eintrag sich zudem sehr genau regeln lässt.

Beim Verbinden von zwei Metallbauteilen mit einem Glaslot müssen aber die unterschiedlichen Materialeigenschaften der eingesetzten Werkstoffe und dabei speziell der Wärmeausdehnungskoeffizient besonders beachtet werden.

Durch die direkte Einwirkung des Lasers auf das Bauteil ist das Verfahren des Laser unterstützen Glaslotfügen jedoch hauptsächlich für einzelne, direkt zugängliche Fügeverbindungen geeignet. Für einen Brennstoffzellenstapel mit mehreren Einzelzellen wäre dieses Verfahren, bei dem jede einzelne Ebene des Brennstoffzellenstapels nacheinander mit dem Laser gefügt werden müsste, nicht sinnvoll.

Aus WO 2011/057851 A1 bereits ist ein Verfahren und eine Vorrichtung zum Fügen von keramischen Bauteilen bekannt, bei dem die Bauteile mit Hilfe eines Lasers und insbesondere mit Hilfe von Glaslot gelötet werden. Vorteilhaft können dabei über einen zweiten Laser die Fügeparameter manipuliert werden.

Ferner wird in US 2009/114625 A1 ein Verfahren offenbart, bei dem zwei Bauteile mit Hilfe eines Lasers gefügt werden, indem beide Bauteile benachbart zueinander angeordnet werden, ein Füller in den Zwischenraum zwischen den Bauteilen positioniert wird, anschließend ein erster Laser die Fügenaht abfährt, wobei der Füller schmilzt und die Naht zwischen den Bauteilen ausfüllt, und mit Hilfe eines zweiter Lasers eine nachträgliche Wärmebehandlung der Lötnaht durchführt.

Darüber hinaus sind Laseranwendungen auch als Nachbehandlung von metallischen und/oder nichtmetallischen Beschichtungen aus BE 714 641 A bekannt.

### Aufgabe und Lösung

Der Erfindung liegt die Aufgabe zugrunde, ein effektives Verfahren zum stoffschlüssigen und gasdichten Fügen von metallischen und/oder keramischen Bauteilen mit Hilfe eines keramischen Zusatzwerkstoffes zur Verfügung zu stellen, welches insbesondere als Reparaturverfahren für undichte Fügeverbindungen geeignet ist.

Die Aufgabe der Erfindung wird gelöst durch ein Verfahren zum Laser unterstützten Fügen von metallischen und/oder keramischen Bauteilen gemäß Hauptanspruch 1. Vorteilhafte Ausgestaltungen des Verfahrens ergeben sich aus den auf diesen Anspruch rückbezogenen Ansprüchen.

### Gegenstand der Erfindung

Im Rahmen der Erfindung wurde gefunden, dass sich ein Laser unterstütztes Fügeverfahren von metallischen und/oder keramischen Bauteilen zum gasdichten Verbinden von wenigstens zwei metallischen und/oder keramischen flächigen Bauteilen, insbesondere als Reparaturverfahren für undichte Fügeverbindungen eignet, bei dem eine schon vorhandene, aber undichte Fügeverbindung aus einem keramischen Zusatzwerkstoff als Verbindungswerkstoff vorliegt. Es hat sich herausgestellt, dass Bauteile nach einem Fügeprozess relativ schnell abgekühlt werden. Dadurch entstehen im Glaslot thermisch bedingte Spannungen, die häufig zu Rissen, und somit zu einer ungewollten Gasdurchlässigkeit führen.

Bei den gasdicht zu verbindenden Bauteilen kann es sich sowohl um Komponenten aus einem keramischen und/oder einem metallischen Material handeln. Als typische keramische Materialien sind beispielsweise die Oxide des Zirkonium und Aluminium, magnesiumhaltiger Forsterit (Mg₂SiO₄) und Stearit (3 MgO•4 SiO₄•H₂0) zu nennen, während als metallische Komponenten insbesondere Kohlenstoffstahl, Edelstahl oder Stahllegierungen in Frage kommen. Im Bereich der Hochtemperatur-Brennstoffzelle sind insbesondere Bauteile aus chromhaltigem ferritischen Stahl gegeneinander oder ein Stahlbauteil an eine Keramikplatte aus Yttrium-stabilisiertem Zirkonoxid zu fügen. Typische SOFC-Kathoden umfassen beispielsweise Lanthan Strontium Kobalt Eisenoxide (LSF) (La_{0.60}Sr_{0.40}Co_{0.20}Fe_{0.80}O₃), oder auch Lanthan Strontium Manganoxide La_{0.85}Sr_{0.15}MnO₃, beide mit oder ohne Zusatz von mit Gadolinium dotiertem Ceroxid (GDC).

Bei den Fügeverbindungen zwischen SOFC-Komponenten haben sich als keramische Fügematerialien insbesondere Glaslote als Erfolg versprechend herausgestellt. In der Regel werden hier kristallisierende Glaslote als Fügematerial eingesetzt.

Typische Beispiele für solche Glaslote sind die im Forschungszentrum Jülich entwickelten Barium-Calcium-Silikatgläser, die je nach Einsatzzweck mit weiteren Zusätzen, wie z. B. Zinkoxid für langsamere Kristallisation, versehen werden können.

Der bei dem erfindungsgemäßen Verfahren eingesetzte Laser sollte im Wellenlängenbereich zwischen 800 und 10600 nm arbeiten. Insbesondere dafür geeignet sind beispielsweise Festkörperlaser, wie ein Nd:YAG-Laser (kurz für Neodym-dotierter Yttrium-Aluminium-Granat-Laser, mit infraroter Strahlung mit der Wellenlänge 1064 nm) oder auch Gaslaser, wie beispielsweise ein Kohlendioxidlaser (oft auch als CO₂-Lase bezeichnet, elektrisch angeregter Gaslaser im mittleren Infrarot (MIR) Wellenlängenbereich, arbeitet bei 10,6 µm). Zunehmend finden auch der Faserlaser (Wellenlänge 1000 -1550 nm) und der Scheibenlaser (Wellenlänge 1030 nm) Anwendungen bei der Materialbearbeitung, wo sie die bisher gebräuchlichen Typen (CO₂-Laser, lampengepumpte Nd:YAG-Laser) teilweise ersetzen können.

Bei dem erfindungsgemäßen Verfahren wird der Laserstrahl derart auf die Verbindung aus dem keramischen Zusatzwerkstoff zwischen den Bauteilen gerichtet, dass durch den Energieeintrag des Lasers der schon vorliegende keramische Zusatzwerkstoff zumindest teilweise aufgeschmolzen werden kann. Dabei ist zu beachten, dass der Laserstrahl nicht unbeabsichtigt auf eines der Bauteile trifft, was zu einer unerwünschten Beschädigung des Bauteils führen könnte.

Der Energieeintrag des Lasers sollte an der Stelle des keramischen Zusatzwerkstoffes wenigstens derart hoch sein, dass er das Fügematerial während des Verfahrens aufzuschmelzen vermag. Dazu sind gegebenenfalls einige wenige Vorversuche notwendig. Während des Fügens wird in der Regel der keramische Zusatzwerkstoff in pulver- oder pastenförmigem Zustand aufgebracht. Nach dem Fügen liegt jedoch dieser keramische Fügewerkstoff regelmäßig in einer anderen Konfiguration vor, die im Unterschied zu dem pulverförmigen Material einen anderen, insbesondere einen höheren Schmelzpunkt zum Wiederaufschmelzen aufweist.

Der Energieeintrag eines Lasers an einer bestimmten Stelle wird gemäß der Erfindung während des Fügeverfahrens
jedoch vorteilhaft durch eine Fokussierung, bzw. eine Defokussierung des Lasers variiert . Das Fokussieren, bzw. Defokussieren kann dabei auf unterschiedliche Weise realisiert werden. In einer Ausführungsform des Verfahrens wird durch Relativbewegung zwischen dem aufzuschmelzenden keramischen Zusatzmaterial und dem Laser der Abstand vergrößert, bzw. verkleinert, wodurch sich gleichzeitig der Fokus des Lasers mehr oder weniger aus der Ebene der keramischen Verbindung bewegt. In der Regel reicht eine defokussierte Einstellung des Lasers aus, um das keramische Material erneut aufzuschmelzen.

Alternativ kann aber die Fokussierung bzw. Defokussierung des Lasers über eine optische Einrichtung, z. B. mit Hilfe von Linsen und/oder Spiegel erfolgen, ohne dass der Abstand zwischen dem Laser und dem aufzuschmelzenden, keramischen Material verändert werden muss. Natürlich sind auch Kombinationen dieser beiden Alternativen möglich.

Der Laser als Werkzeug ist insbesondere prädestiniert für das Reparieren von undichten SOFC - Stacks. Mit dem Laserstrahl kann vorteilhaft lokal nur die undichte Stelle erwärmt und die Glas - Keramik des Fügematerials aufgeschmolzen werden. Die scharfe Fokussierung des Laserstrahls ermöglicht sogar das Löten im Spalt (h ~ 200 µm) zwischen zwei Blechen.

Bei geeigneter Strahlform (große Brennweite, kleiner Öffnungswinkel) kann das Glaslot in der Tiefe stärker erhitzt werden und die Bleche werden mit dem defokussierten Strahl zusätzlich leicht erwärmt, um die Haftung zu verbessern.

In einer ersten Ausgestaltung des erfindungsgemäßen Verfahrens wird die vorhandene Fügeverbindung nur an einer Stelle, das bedeutet nahezu punktförmig, nachbearbeitet. Dazu wird der Laser auf die zuvor ermittelte undichte Fügestelle ausgerichtet, und das dort vorhandene Fügematerial zumindest teilweise wieder aufgeschmolzen.

Sofern es sich bei der undichten Fügeverbindung um eine Fügenaht handelt, kann das Verfahren auch in der Weise eingesetzt werden, dass mit Hilfe des Lasers diese Fügenaht abgefahren wird, und so das Fügematerial entlang der Fügenaht nacheinander aufgeschmolzen wird.

Dies kann vorteilhaft durch eine Relativbewegung zwischen dem ausgerichteten Laser und der nachzuarbeitenden Fügenaht ausgeführt werden, bei dem entweder der Laser über die Fügenaht oder die Fügeverbindung unter dem Laser entlang geführt wird. Die Relativgeschwindigkeit, das bedeutet die Verweildauer der Lasereinstrahlung an einer Stelle, hängt dabei von dem jeweils benötigten Energieeintrag und der eingestellten Fokussierung bzw. Defokussierung ab.

Das erfindungsgemäße Verfahren ist insbesondere für solche undichte Fügeverbindungen geeignet, die mit Hilfe des Laserstrahls direkt zugänglich sind, d. h., bei denen der Laserstrahl direkt auf die undichte Fügeverbindung gerichtet werden kann, ohne dass die beteiligten Bauteile beim Bestrahlen der Fügeverbindung mit dem Laser in Mitleidenschaft gezogen werden. Undichte Fügeverbindungen bei komplexen Bauteilgeometrien, bei denen die Fügeverbindungen nicht durch den Laserstrahl direkt erreicht werden können, sind mit diesem Verfahren regelmäßig nicht zu beheben.

Gemäß der Erfindung wird bei dem Verfahren nicht nur das schon vorhandene Fügematerial zumindest teilweise aufgeschmolzen, sondern es wird zusätzlich glaskeramisches Fügematerial in dem Bereich der Fügung zugeführt.

Das dafür eingesetzte Fügematerial kann dabei dasselbe sein, welches schon für die ursprüngliche Fügung verwendet wurde. Es kann sich aber auch um ein anderes Fügematerial handeln. Es sollte nur kompatibel zum schon vorhandenen Fügematerial sein.

Insbesondere kann es sich bei dem zusätzlich zugeführten glaskeramischen Fügematerial um ein binderloses Glaslot handeln. Typische Beispiele für solche Glaslote sind die im Forschungszentrum Jülich GmbH entwickelten Barium-Calcium-Silikatgläser, die je nach Einsatzzweck mit weiteren Zusätzen, wie z. B. Zinkoxid für langsamere Kristallisation, versehen werden können.

Das Fügeverfahren ist sowohl für punktförmige, als auch für nahtförmige Fügeverbindungen, insbesondere als Reparaturverfahren geeignet. Vorteilhaft muss bei einer Undichtigkeit in der Fügeverbindung nicht die gesamte Bauteilanordnung wieder einem Aufheizprozess unterzogen werden. Die Nachbehandlung kann vorteilhaft lokal an der undichten Fügeverbindung erfolgen.

### Spezieller Beschreibungsteil

Im Folgenden werden einige Versuche vorgestellt, die die Erfindung näher erläutern sollen, ohne aber den Schutzbereich einzuschränken. Zudem werden die einzelnen Prozessschritte des erfindungsgemäßen Verfahrens schematisch dargestellt. Es zeigt:

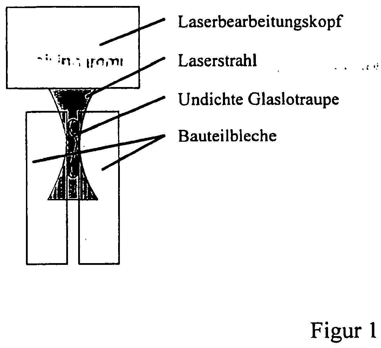

- Figur 1:: schematische Darstellung des erfindungsgemäßen Verfahrens, bei dem der Laserstrahl zwischen zwei nicht gasdicht verbundenen Bauteilen auf die Fügeverbindung gerichtet wird.

Die nachfolgenden Versuche wurden mit zunächst im Ofen gefügten SOFC-Kassetten (Blechabmessungen 50 x 50 x 2,5 mm³) durchgeführt, bei denen ein Helium-Lecktest durchgeführt wurde, und die eine Leckage von mehr als 10⁻⁵ mbar L /s aufwiesen. Der Abstand der Bleche an der Fügeverbindung betrug dabei 200 µm und die Breite der undichten Naht lag bei 8 mm.

In einer ersten Ausgestaltung des Verfahrens wurde die gasdurchlässige Fügenaht erfindungsgemäß mit einem Nd:YAG Laser abgefahren, wobei das vorhandene Glaslot Nr. 87 zumindest teilweise wieder aufgeschmolzen wurde. Der Laserstrahl wurde defokussiert (Strahlradius ∼ 2 mm). Die Nd:YAG-Laserleistung lag bei ∼ 180 W, die Verfahrgeschwindigkeit bei 0,16 mm/s. Nach der Behandlung wurde erneut ein Helium-Lecktest durchgeführt, bei dem die Ergebnisse durchweg bei kleiner als 10⁻⁷ mbar L/s lagen.

In einer weiteren Ausgestaltung gemäß der Erfindung wurde Zusatzglaslot zugeführt. Dabei handelte
es sich um Glaslot Nr. 87. Der Laserstrahl wurde defokussiert (Strahlradius ∼ 2 mm). Die Nd:YAG-Laserleistung lag bei ∼ 180 W, die Verfahrgeschwindigkeit bei 0,16 mm/s. Nach der Behandlung wurde erneut ein Helium-Lecktest durchgeführt, bei dem die Ergebnisse durchweg bei kleiner als 10⁻⁸ mbar L/s lagen.

In einer weiteren Ausgestaltung der Erfindung wurden Fügeversuche mit einem CO₂-Laser durchgeführt, die Laserleistung lag bei ∼ 350 W, die Verfahrgeschwindigkeit bei 0,16 mm/s, es wurde ebenfalls Zusatzglaslot zugeführt, der Strahl wurde defokussiert (Strahlradius ∼ 2 mm). Nach der Behandlung wurde erneut ein Helium-Lecktest durchgeführt, bei dem die Ergebnisse durchweg bei kleiner als 10⁻⁸ mbar L/s lagen.

Bei den Untersuchungen wurde zudem herausgefunden, dass es besonders vorteilhaft ist, wenn zusätzliches Glaslot auf die Lötstelle aufgetragen wird. Zum einen können hierdurch beide Bauteilbleche durch diese Glaslotschicht gekühlt werden und sind somit weniger anfällig für Beschädigungen durch lokale Erhitzung. Zum zweiten füllt das Zusatzglaslot den üblicherweise vorhandenen Spalt zwischen den Blechen, sodass eine Verbindung Stahl-Zusatzglaslot-Glaslotraupe entsteht. In allen Ausgestaltungen des Verfahrens, mit oder ohne zusätzlichen glaskeramischen Fügewerkstoff, konnte jedoch nach der Behandlung die Gasdichtigkeit der überarbeiteten Fügeverbindung mit deutlich kleiner als 10⁻⁶ mbar L/s nachgewiesen werden.

## Patentansprüche

1. Fügeverfahren zum Verbinden von wenigstens zwei metallischen und/oder keramischen flächigen Bauteilen, bei dem als Verbindungsbildner für die stoffschlüssige Verbindung ein glaskeramischer Zusatzwerkstoff eingesetzt wird,
**dadurch gekennzeichnet,**
- **dass** bei einer schon vorhandenen Fügeverbindung ein Laserstrahl auf den ebenfalls vorhandenen glaskeramischen Zusatzwerkstoff gerichtet wird,
- **dass** der glaskeramische Zusatzwerkstoff durch den Energieeintrag des Lasers zumindest teilweise aufgeschmolzen wird, und
- **dass** der aufgeschmolzene glaskeramische Zusatzwerkstoff beim Abkühlen eine stoffschlüssige gasdichte Verbindung zwischen den zu fügenden Bauteilen bildet,
- wobei der Energieeintrag des Lasers am Ort des glaskeramischen Zusatzwerkstoffs durch eine Fokussierung bzw. Defokussierung des Lasers eingestellt wird, wobei die Fokussierung bzw. Defokussierung des Lasers durch eine Relativbewegung des Lasers zu dem glaskeramischen Zusatzwerkstoff oder durch eine optische Einrichtung eingestellt wird und bei dem der Fügeverbindung zusätzlich ein glaskeramischer Zusatzwerkstoff als Fügematerial zugeführt wird.

2. Fügeverfahren nach Anspruch 1, bei dem ein CO₂-Laser, ein Nd:YAG-Laser, ein Faserlaser, ein Diodenlaser oder ein Scheibenlaser eingesetzt wird.

3. Fügeverbindung nach einem der Ansprüche 1 bis 2, bei dem der glaskeramische Zusatzwerkstoff nur punktuell aufgeschmolzen wird.

4. Fügeverfahren nach einem der Ansprüche 1 bis 3, bei dem durch eine Relativbewegung zwischen dem Laser und dem glaskeramischen Zusatzwerkstoff dieser entlang einer Fügenaht zumindest teilweise erneut aufgeschmolzen wird.

5. Fügeverfahren nach Anspruch 1, bei dem der Fügeverbindung
ein binderloses Glaslot als zusätzlicher glaskeramischer Zusatzwerkstoff zugeführt wird.

6. Fügeverfahren nach einem der vorherigen Ansprüche 1 oder 5, bei dem der zusätzliche glaskeramische Zusatzwerkstoff durch den Laser aufgeschmolzen wird.

## Claims

1. Joining process for connecting at least two metal and/or ceramic flat components, in which a glass ceramic filler material is used to form the connection for the firmly bonded connection,
**characterised in that**
- in the case of an already existing joining connection a laser beam is directed onto the glass ceramic filler material also existing,
- the glass ceramic filler material is at least partly fused through the energy input of the laser and
- on cooling the fused glass ceramic filler material forms a firmly bonded, gastight connection between the components to be joined,
- in which the energy input of the laser at the location of the glass ceramic filler material is adjusted through focussing or defocussing the laser, in which the focussing or defocussing of the laser is adjusted through a relative movement of the laser to the glass ceramic filler material or through an optical device and in which a glass ceramic filler material is also applied to the joining connection as a joining material.

2. Joining process according to claim 1, in which a CO₂ laser, an Nd:YAG laser, a fibre laser, a diode laser or a disc laser is used.

3. Joining connection according to one of claims 1 to 2, in which the glass ceramic filler material is fused only in places.

4. Joining process according to one of claims 1 to 3, in which it is at least partly fused again along a joining seam through a relative movement between the laser and the glass ceramic filler material.

5. Joining process according to claim 1,
in which a binderless glass solder is applied to the joining connection as an additional glass ceramic filler material.

6. Joining process according to one of previous claims 1 or 5, in which the additional glass ceramic filler material is fused through the laser.

## Revendications

1. Procédé d'assemblage servant à relier au moins deux composants plats métalliques et/ou céramiques, où un matériau additionnel en vitrocéramique est employé en tant qu'agent générateur de liaison pour la liaison par liaison de matière,
**caractérisé en ce**
- **que** dans le cas d'une liaison d'assemblage déjà présente, un rayon laser est pointé sur le matériau additionnel vitrocéramique également présent,
- **que** le matériau additionnel vitrocéramique est fondu au moins en partie par l'apport d'énergie du laser, et
- **que** le matériau additionnel vitrocéramique fondu forme, lors du refroidissement, une liaison étanche aux gaz par liaison de matière entre les composants à assembler,
- dans lequel l'apport d'énergie du laser est réglé à l'emplacement du matériau additionnel vitrocéramique par une focalisation ou défocalisation du laser, dans lequel la focalisation ou défocalisation du laser est réglée par un déplacement relatif du laser par rapport au matériau additionnel vitrocéramique ou par un système optique et en supplément un matériau additionnel vitrocéramique est amené en tant que matériau d'assemblage à la liaison d'assemblage.

2. Procédé d'assemblage selon la revendication 1, où un laser à CO₂, un laser Nd:YAG, un laser à fibre, un laser à diode ou un laser à disque est employé.

3. Procédé d'assemblage selon l'une quelconque des revendications 1 à 2, où le matériau additionnel vitrocéramique est fondu seulement ponctuellement.

4. Procédé d'assemblage selon l'une quelconque des revendications 1 à 3, où le matériau additionnel vitrocéramique est fondu à nouveau au moins en partie le long d'un joint d'assemblage par un déplacement relatif entre le laser et le matériau additionnel vitrocéramique.

5. Procédé d'assemblage selon la revendication 1, où une brasure sans liant est amenée en tant que matériau additionnel vitrocéramique supplémentaire à la liaison d'assemblage.

6. Procédé d'assemblage selon l'une quelconque des revendications précédentes 1 ou 5, où le matériau additionnel vitrocéramique supplémentaire est fondu par le laser.
